Europäisches Patentamt

European Patent Office

Office européen des brevets

(19)

(11) **EP 0 783 114 A1**

(12) **DEMANDE DE BREVET EUROPEEN**

(43) Date de publication:
**09.07.1997 Bulletin 1997/28**

(51) Int Cl.⁶: **G01S 13/93, B60Q 1/48**

(21) Numéro de dépôt: **96402851.8**

(22) Date de dépôt: **20.12.1996**

(84) Etats contractants désignés:
**DE ES GB IT**

(30) Priorité: **02.01.1996 FR 9600009**
**02.01.1996 FR 9600010**

(71) Demandeur: **REGIE NATIONALE DES USINES RENAULT**
**92109 Boulogne-Billancourt (FR)**

(72) Inventeurs:
• **Baravian, Laurent**
  **92800 Puteaux (FR)**
• **Hamidi, Massoud**
  **92380 Garches (FR)**

(74) Mandataire: **Fernandez, Francis et al**
**RENAULT,**
**Service 0267,**
**860, Quai de Stalingrad**
**92109 Boulogne-Billancourt (FR)**

(54) **Système de détection et de mesure de créneau de stationnement**

(57) L'invention concerne un système de détection et de mesure de créneau de stationnement qui est embarqué sur un véhicule porteur cherchant à se garer dans une file de stationnement de véhicules.

L'invention réside dans le fait qu'il comprend, sur chaque côté latéral du véhicule porteur, deux télémètres (10, 12) dont les axes d'émission/réception ont des directions ($\theta$1, $\theta$2) dirigées vers le créneau éventuel et qui fournissent des valeurs de distances (d1, d2). Ces distances mesurées (d1, d2) sont comparées à des valeurs de seuils (dmin, dmax) dans un dispositif (18) pour prendre en compte les distances parcourues (Xi, Xn) et mesurées par un odomètre 48. Un dispositif de calcul (46) calcule la longueur (D) du créneau à partir des distances télémétrées (dl, d2) et des distances parcourues (Xi, Xn).

FIG.1b

## Description

L'invention concerne un système embarqué sur un véhicule automobile pour détecter un créneau de stationnement et en mesurer la longueur de manière précise.

Il a été décrit des dispositifs d'assistance aux manoeuvres de garage d'un véhicule automobile dans un créneau d'une file de stationnement, notamment dans le brevet européen 0 305 907 ; le dispositif de ce brevet comprend au moins un émetteur, disposé sur un côté latéral du véhicule, qui émet une onde transversalement en direction de la file de stationnement. L'onde réfléchie, qui est recueillie pendant le passage devant le créneau de stationnement, se distingue de l'onde réfléchie en dehors du créneau de stationnement de sorte que la longueur du créneau peut être mesurée en mesurant la distance parcourue par le véhicule lorsque l'onde réfléchie correspond à celui du créneau de stationnement réfléchissant l'onde émise.

Un tel dispositif nécessite la mesure de la distance parcourue par le véhicule lors du passage devant le créneau avec une bonne précision, ce qui implique l'utilisation de capteurs appropriés. Par ailleurs, cette mesure du créneau ne peut être réalisée qu'une seule fois par passage.

Un but de la présente invention est donc de réaliser un système de détection de créneau de stationnement qui permet de déterminer si la longueur du créneau est suffisante pour garer le véhicule porteur sans connaître la distance parcourue par le véhicule porteur du système.

Encore un autre but de la présente invention est de réaliser un système de détection de créneau de stationnement qui permet d'effectuer plusieurs mesures par passage devant le créneau de stationnement, ce qui permet des recoupements entre les mesures et ainsi avoir une meilleure précision.

Un autre but de la présente invention est de réaliser un système de détection de créneau de stationnement qui indique au chauffeur du véhicule la longueur du créneau de stationnement.

L'invention concerne un système de détection de créneau entre deux véhicules successifs d'une file de stationnement de véhicules embarqué sur un véhicule porteur, caractérisé en ce qu'il comprend :

- au moins un dispositif de télémétrie ou télémètre qui est disposé sur au moins un côté latéral du véhicule porteur, ledit télémètre émettant un faisceau d'ondes dont l'axe d'émission/réception peut prendre au moins deux directions par rapport à la direction de déplacement du véhicule porteur et fournissant des valeurs de distances pour chaque direction d'émission, et
- un dispositif d'analyse des valeurs des distances mesurées suivant les deux directions d'émission/réception, ledit dispositif d'analyse indiquant au chauffeur du véhicule porteur si la distance entre les deux véhicules successifs de la file de stationnement est suffisante ou non pour garer le véhicule porteur.

Suivant différentes variantes de l'invention, chaque côté latéral du véhicule porteur du système est équipé de deux télémètres qui sont soit disposés au même endroit, soit séparés par une certaine distance, chacun des télémètres émettant suivant un seul axe d'émission/réception.

Par ailleurs, les axes d'émission/réception des télémètres peuvent être croisés ou non et peuvent faire des angles égaux ou non par rapport à la direction de déplacement du véhicule porteur.

Dans le cas d'un seul télémètre par côté latéral du véhicule porteur, le télémètre sera par exemple du type "balayant", c'est-à-dire avec un axe d'émission/réception qui peut prendre plusieurs positions angulaires de manière à "balayer" le côté latéral du véhicule.

Le dispositif d'analyse comprend des moyens de comparaison pour comparer, pendant la durée de passage du véhicule porteur devant un créneau, les valeurs des distances mesurées à des valeurs de seuils et ensuite déterminer si le créneau a une longueur suffisante ou non pour le garage du véhicule porteur. Il comprend également un circuit de calcul de la longueur du créneau de stationnement lorsqu'elle est suffisante.

Par ailleurs, selon l'art antérieur, la précision de la mesure de la longueur du créneau de stationnement dépend de la précision avec laquelle le début et la fin du créneau sont détectés. Or, les signaux des ondes réfléchis par les obstacles dans la file de stationnement ne peuvent pas toujours être bien distingués selon qu'il y a un véhicule en stationnement ou non car cela dépend du type d'obstacle réfléchissant l'onde émise.

En outre, une seule mesure du créneau peut être effectuée pendant le passage du véhicule devant le créneau de stationnement, ce qui introduit une incertitude supplémentaire quant à la mesure.

Un but de la présente invention est donc de réaliser également un système embarqué sur un véhicule porteur pour détecter un créneau de stationnement et pour en mesurer la longueur à plusieurs reprises au cours du passage du véhicule porteur devant le créneau de stationnement de manière à effectuer une corrélation entre les différentes mesures de longueur.

Ce but est atteint en équipant le véhicule porteur d'au moins un télémètre par côté latéral qui mesure suivant des directions angulaires déterminées les distances du véhicule porteur par rapport aux véhicules de la file de stationnement de manière à détecter les pare-chocs des véhicules en stationnement de part et d'autre du créneau. Ces détections des pare-chocs déclenchent des mesures des distances parcourues par le véhicule porteur, mesures qui sont utilisées pour calculer la longueur du créneau à plusieurs reprises lors du passage du véhicule porteur.

L'invention concerne un système de détection et de mesure de créneau de stationnement entre deux véhicules successifs d'une file de stationnement de véhicules, ledit système étant embarqué sur un véhicule porteur, caractérisé en ce qu'il comprend :

- au moins un télémètre qui est disposé sur au moins un côté latéral du véhicule porteur, ledit télémètre émettant un faisceau d'ondes dont l'axe d'émission/réception peut prendre au moins deux directions par rapport à la direction de déplacement du véhicule porteur et fournissant des valeurs de distances pour chaque direction d'émission/réception,
- un dispositif d'analyse des valeurs des distances mesurées suivant les deux directions d'émission/réception de manière à détecter les mesures qui correspondent à des réflexions sur les pare-chocs des véhicules en stationnement de part et d'autre du créneau de stationnement et à fournir des signaux de détection de début et fin de pare-chocs,
- un dispositif de mesure de la distance parcourue par le véhicule porteur qui est déclenché par les signaux de détection de début et de fin de pare-chocs des véhicules en stationnement, et
- un dispositif de calcul de la longueur du créneau de stationnement à partir des distances mesurées par le télémètre et des distances parcourues par le véhicule porteur et mesurées par le dispositif de mesure.

Suivant différentes variantes de l'invention, chaque côté latéral du véhicule porteur du système est équipé de deux télémètres qui sont soit disposés au même endroit, soit séparés par une certaine distance, chacun des télémètres émettant suivant un seul axe d'émission/réception. Par ailleurs, les axes d'émission/réception des télémètres peuvent être croisés ou non et peuvent faire des angles égaux ou non par rapport à la direction de déplacement du véhicule porteur.

Dans le cas d'un seul télémètre par côté latéral du véhicule porteur, le télémètre sera par exemple du type "balayant", c'est-à-dire avec un axe d'émission/réception qui peut prendre plusieurs positions angulaires de manière à "balayer" le côté latéral du véhicule.

Le dispositif d'analyse comprend des moyens de comparaison pour comparer, pendant la durée de passage du véhicule porteur devant un créneau, les valeurs des distances mesurées par les télémètres à des valeurs de seuils de manière à déterminer les distances mesurées qui correspondent aux pare-chocs des véhicules de part et d'autre du créneau de stationnement et ensuite déclencher les mesures des distances parcourues par le véhicule porteur à l'aide du dispositif de mesure approprié.

Le dispositif d'analyse comprend essentiellement une machine d'états dont le passage d'un état à l'autre dépend du résultat de la comparaison effectuée. D'autres caractéristiques et avantages de la présente invention apparaîtront à la lecture de la description suivante d'exemples particuliers de réalisation, ladite description étant faite en relation avec les dessins joints dans lesquels :

- la figure 1A est un schéma fonctionnel d'un premier système de détection et de mesure de créneau de stationnement selon l'invention,
- la figure 1B est un schéma fonctionnel d'un second système de détection et de mesure de créneau de stationnement selon l'invention,
- les figures 2, 3 et 4 sont des schémas montrant chacun schématiquement un véhicule équipé d'un système selon l'invention et deux véhicules en stationnement ainsi que les paramètres dont il est tenu compte dans le système,
- la figure 5 est un schéma géométrique permettant de déterminer les contraintes auxquelles est soumis le système selon l'invention,
- la figure 6 est un schéma géométrique permettant de déterminer les conditions de la levée d'ambiguïté en distance,
- les figures 7-A et 7-B sont des schémas montrant la correspondance entre les distances mesurées par les télémètres du système selon l'invention et le passage du véhicule équipé du système selon l'invention devant les véhicules d'une file de stationnement,
- la figure 8A est un schéma d'un dispositif d'analyse des distances mesurées par les télémètres du système de la figure 1A, et
- la figure 8B est un schéma d'une machine d'états qui est un élément essentiel du dispositif d'analyse du schéma de la figure 1B.

Sur les figures, les références identiques désignent des éléments identiques.

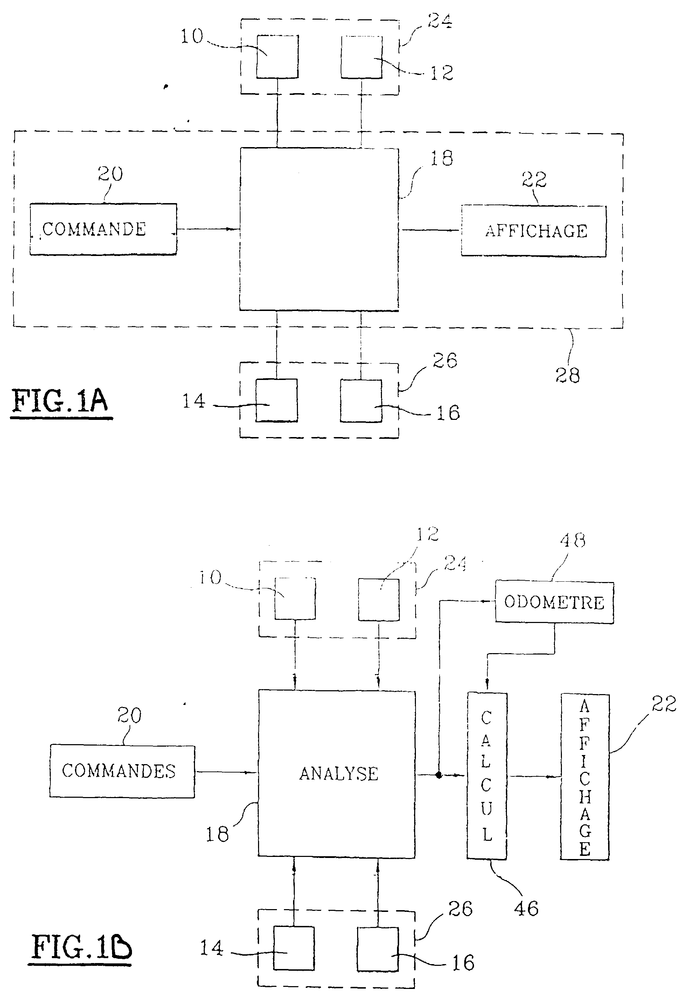

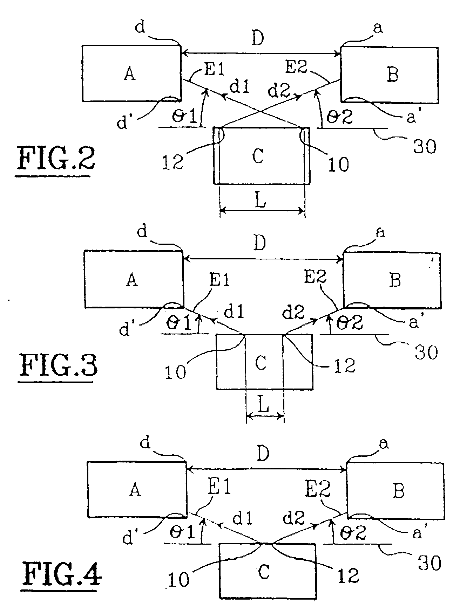

Conformément à la figure 1A, le système de détection de créneau de stationnement selon l'invention tel qu'il est embarqué sur un véhicule porteur C ou F (Figures 2 à 7) comprend un premier dispositif de mesure de distances 24 disposé sur un premier côté latéral du véhicule et un deuxième dispositif de mesure de distances 26 disposé sur le deuxième côté latéral du véhicule. Ces dispositifs de mesure de distances 24 et 26 sont connectés à un dispositif de calcul 28 qui comprend un dispositif d'analyse 18, un organe de commande 20 et un circuit d'affichage 22.

Conformément à la figure 1B, le système de détection de créneau de stationnement selon l'invention tel qu'il est embarqué sur un véhicule porteur C ou F (Figures 2 à 7) comprend un premier dispositif de mesure de distances 24 disposé sur un premier côté latéral du véhicule et un deuxième dispositif de mesure de distances 26 disposé sur le deuxième côté latéral du véhicule. Ces dispositifs de mesure de distances 24 et 26 sont connectés à un dispositif d'analyse 18 des distances mesurées qui fournit, en fonction des résultats des analyses, des signaux qui sont appliqués, d'une part, à un odomètre 48 ou dispositif de mesure de la distance parcourue par le véhicule porteur et, d'autre part, à un dispositif de calcul 46 recevant par ailleurs les signaux représentatifs des distances parcourues par le véhicule porteur.

Le dispositif de calcul 46 calcule la longueur du créneau de stationnement, longueur qui est affichée sur le dispositif d'affichage 22. Un dispositif de commande 20 permet d'entrer les paramètres de fonctionnement du système ainsi que les commandes du pilote du véhicule porteur.

Que se soit pour le système de la figure 1A ou celui de la figure 1B, chaque dispositif de mesure de distances 24 ou 26, associé chacun à un côté latéral du véhicule, comprend de préférence deux télémètres référencés 10, 12 pour le dispositif 24 et 14, 16 pour le dispositif 26. Dans chaque couple de télémètres, l'un émet un faisceau d'ondes suivant un axe d'émission E1 (référence 10) (Figures 2, 3 et 4) et l'autre émet un faisceau d'ondes suivant un axe d'émission E2 (référence 12) . L'axe d'émission EI fait un angle $\theta_1$ par rapport à l'axe longitudinal 30 du véhicule porteur C et l'autre un angle $\theta_2$ par rapport au même axe longitudinal.

Dans une variante, chaque couple de télémètres est remplacé par un télémètre unique qui émet et reçoit suivant au moins deux directions d'angles $\theta_1$ et $\theta_2$ par rapport à l'axe longitudinal 30.

Ce télémètre unique peut être du type "balayant", c'est-à-dire que l'axe d'émission/réception peut prendre plusieurs positions angulaires de manière à "balayer" le côté latéral du véhicule porteur.

Les télémètres d'un couple peuvent être disposés à un même emplacement (Figure 4) ou à des emplacements différents séparés par une distance L (Figures 2 et 3). Les faisceaux d'ondes émises peuvent être croisés (Figure 2) ou ne pas l'être (Figures 3 et 4). Les faisceaux d'ondes dits croisés ont des axes d'émission qui sont dirigés vers l'extrémité la plus éloignée du véhicule porteur tandis que les faisceaux d'ondes dits décroisés ont des axes d'émission qui sont dirigés vers l'extrémité la plus proche du véhicule porteur.

L'étude géométrique des figures 2, 3 et 4 permet de calculer la distance D entre deux véhicules A et B en stationnement par la relation :

$$D = d1.\cos\theta_1 + d2.\cos\theta_2 - L \tag{1}$$

dans laquelle d1 est la distance mesurée par le télémètre 10, d2 la distance mesurée par le télémètre 12 et L la distance séparant les deux télémètres 10 et 12. Ces distances d1 et d2 sont respectivement celles mesurées par les télémètres 10 et 12 entre, d'une part, le pare-chocs dd' du véhicule A et le télémètre 10 et, d'autre part, entre le pare-chocs aa' du véhicule B et le télémètre 12 (figures 2, 3 et 4).

Connaissant la distance D entre les pare-chocs aa' et dd', il suffit de la comparer à la longueur du véhicule porteur C pour déterminer si la distance D est suffisante pour permettre le garage du véhicule porteur C.

Cependant, pour mesurer instantanément la longueur d'un créneau sans odomètre, il faut mesurer simultanément les distances d1 et d2 et ces mesures simultanées ne sont pas possibles quelles que soient les valeurs de $\theta_1$, $\theta_2$, L, D et de la distance Y du côté latéral du véhicule porteur C par rapport au côté latéral en regard des véhicules de la file de stationnement.

En effet, à titre d'exemple, on comprend que si $\theta_1$ et $\theta_2$ sont petits alors que Y est grand, les faisceaux E1 et E2 ne se réfléchiront pas simultanément sur les pare-chocs et aucune mesure simultanée ne pourra avoir lieu.

Si la distance D est grande, nettement plus grande que ce qui est nécessaire pour le garage, le conducteur n'a pas besoin du système selon l'invention. Il en est de même si la distance D est nettement plus petite que ce qui est nécessaire.

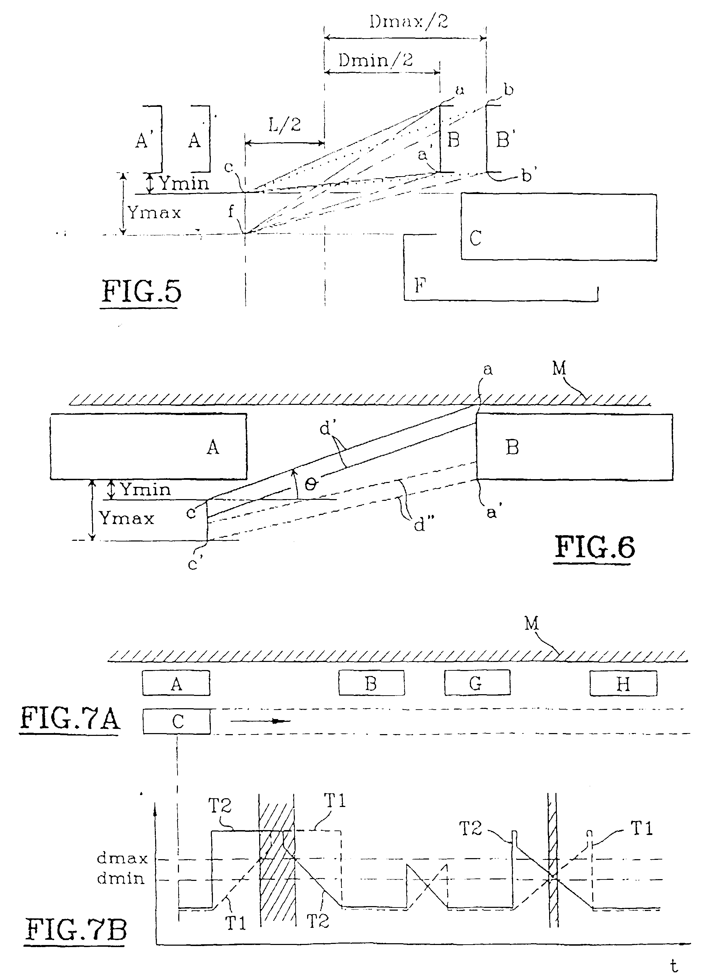

Pour ces raisons, les angles $\theta_1$, $\theta_2$ et la distance L du système selon l'invention sont déterminés en fonction d'un certain nombre de paramètres qui sont les distances minimale Ymin et maximale Ymax entre le côté latéral du véhicule porteur C ou F (figure 5) et le côté latéral en regard de la file de stationnement, la distance minimale Dmin qui est légèrement inférieure à la longueur du véhicule C ou F à garer pour tenir compte de la précision du système, la distance maximale Dmax au-delà de laquelle le conducteur du véhicule porteur peut évaluer, sans avoir recours au système de l'invention, que la longueur du créneau est largement suffisante pour le garage et la largeur minimale w d'une voiture en stationnement.

Le schéma de la figure 5 montre les différents cas possibles de configuration des valeurs de $\theta$ et de D en supposant

que $\theta_1 = \theta_2 = \theta$ et permet de calculer l'angle à donner aux axes d'émission des télémètres afin d'assurer la détection simultanée des véhicules quelles que soient la distance Y de passage et la taille D du créneau dans la plage Dmin à Dmax.

Ainsi, le secteur angulaire (ca, ca') est celui dans lequel peuvent être détectées, du véhicule C, les parties extrêmes du véhicule B et est défini par la relation :

$$2Ymin/(L + Dmin) < tg\theta < 2 (w + Ymin)/(L + Dmin).$$

De même, le secteur angulaire (cb, cb') est celui dans lequel peuvent être détectées , du véhicule C, les parties extrêmes du véhicule B' et est défini par la relation :

$$2Ymin/(L + Dmax) < tg\theta < 2 (w + Ymin)/L + Dmax).$$

Pour le véhicule F, le secteur angulaire (fa, fa') est celui dans lequel peuvent être détectées les parties extrêmes du véhicule B et est défini par la relation :

$$2Ymax/(L + Dmin) < tg\theta < 2(w + Ymax)/(L + Dmin).$$

Le secteur angulaire (fb, fb') est celui dans lequel peuvent être détectées, du véhicule F, les parties extrêmes du véhicule B' et est défini par la relation :

$$2Ymax/(L + Dmax) < tg\theta < 2(w + Ymax)/(L + Dmax).$$

Pour satisfaire simultanément les quatre relations définies ci-dessus, l'angle $\theta$ doit satisfaire la relation :

$$2Ymax/(L + Dmin) < tg\theta < 2(w + Ymin)/(L + Dmax).$$

Il en résulte que le rapport Dmax/Dmin est maximal lorsque :

$$tg\theta = 2Ymax/(L + Dmin) = 2(w + Ymin)/(L + Dmax)$$

et on en déduit que :

$$Dmax = Dmin(w + Ymin)/Ymax + L[(w + Ymin)/Ymax) - 1].$$

Dans le cas où w = 160 cm, Ymin = 50cm et Ymax = 150cm, la dernière formule devient :

$$Dmax = 1,4 \ Dmin + 0,4L.$$

Dans le cas d'une implantation dite croisée des télémètres (Figure 2), le plus grand créneau qui pourra être mesuré sera de 7,2m en prenant L = 4m = Dmin.

Dans le cas d'une implantation dite centrée des télémètres (Figure 4), le plus grand créneau qui pourra être mesuré sera de 5,6m en prenant L = 0m et Dmin = 4m pour garer un véhicule dont la longueur est légèrement supérieure à Dmin.

Dans le cas d'une implantation dite décroisée des télémètres (Figure 3), le plus grand créneau qui pourra être mesuré sera de 4,4m en prenant L = - 3m et Dmin = 4m.

Ces trois exemples numériques montrent qu'une implantation dite croisée des télémètres est souhaitable pour obtenir une large plage de mesures des créneaux dans les conditions imposées pour L, W et Dmin.

Lorsque le véhicule C cherchant à se garer se déplace le long d'une file de stationnement comportant les véhicules A, B, G et H (Figure 7-A) disposés à proximité d'un mur M, les distances d1 et d2 mesurées par les télémètres 10 et 12 varient théoriquement (Figure 7-B) selon les courbes T1 (trait pointillé) et T2 (trait continu) . Dans ces deux courbes, les distances d1 et d2 sont au minimum lorsque les faisceaux sont réfléchis par le flanc des véhicules (parties horizontales basses) et sont au maximum lorsque les faisceaux sont réfléchis par le mur M (parties horizontales hautes). Les distances d1 et d2 varient linéairement lorsque les faisceaux sont réfléchis par le pare-chocs des véhicules si ce dernier est rectiligne et varient continûment si le pare-chocs est arrondi.

Le créneau entre les véhicules A et B est largement suffisant (D > Dmax), celui entre les véhicules B et G est insuffisant (D < Dmin) et celui entre les véhicules G et H est juste suffisant (Dmin < D < Dmax).

Dans le cas du créneau entre les véhicules A et B, les mesures de d1 et d2 sur les parties extrêmes ne peuvent être réalisées simultanément et le calcul de D n'est pas possible (D > Dmax), mais on doit indiquer que le créneau est suffisant.

Dans le cas où le mur M n'existe pas, il est possible que les faisceaux soient réfléchis par des surfaces orthogonales à la direction de déplacement du véhicule C et donnent des courbes T1 et T2 de pentes linéaires qui aboutissent à de faux créneaux.

En outre, comme le montre le schéma de la figure 6, le véhicule C circulant à la distance Ymin détecte le mur M à une distance d'. Le véhicule C détectera la partie extrême du véhicule B à la même distance d' s'il circule à un écartement supérieur à Ymin.

De la même manière, si le véhicule C circule à une distance Ymax, il détectera le flanc du véhicule stationné à une distance d" et il détectera la partie extrême du véhicule à la même distance d" pour un écartement inférieur à Ymax.

Pour lever ces différentes ambiguïtés, l'invention propose de ne tenir compte des mesures de d1 et d2 que dans une certaine plage de valeurs qui sont déterminées en fonction de Ymin et Ymax selon la relation :

$$dmin = Ymax/\sin\theta < d < dmax = (w + Ymin)/\sin\theta.$$

De manière plus précise, la valeur dmin correspond à la distance c'a' tandis que la valeur dmax correspond à la distance ca.

Lorsque les mesures d1 et d2 sont comprises entre dmin et dmax, elles correspondent, sans ambiguïté possible, à l'avant ou l'arrière d'un véhicule stationné. C'est le cas des mesures de d1 et d2 pour le créneau entre les véhicules G et H et la longueur D du créneau est donnée par la relation (1) :

$$D = (d1 + d2)\cos\theta - L.$$

Ces mesures et ce calcul peuvent être effectués un grand nombre de fois pendant l'intervalle de temps où d1 et d2 sont comprises entre dmin et dmax.

Les trois cas présentés sur les figures 7-A et 7-B montrent que la longueur du créneau est suffisamment grande lorsque les mesures de d1 et d2 sont comprises simultanément chacune entre dmin et dmax ou lorsque d1 et d2 sont supérieures à dmax. Dans le premier cas, le calcul de D est possible car on obtient simultanément deux valeurs de d1 et d2 mais ce calcul n'est pas possible dans le deuxième cas.

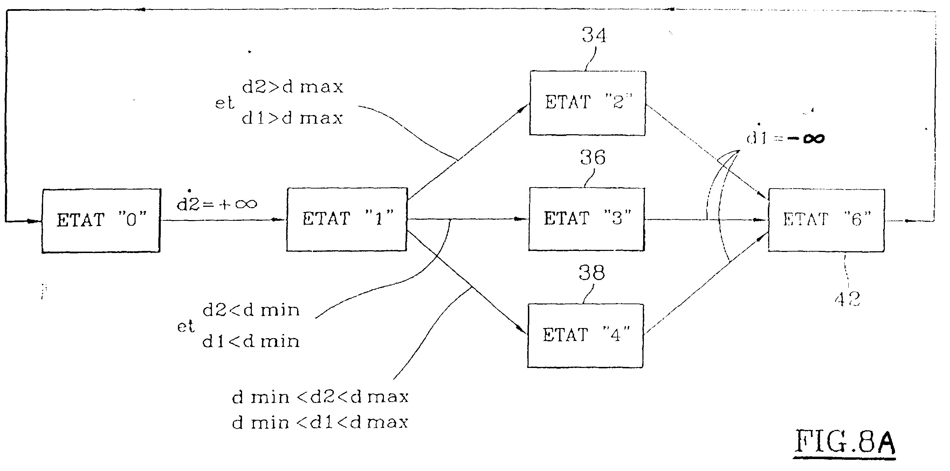

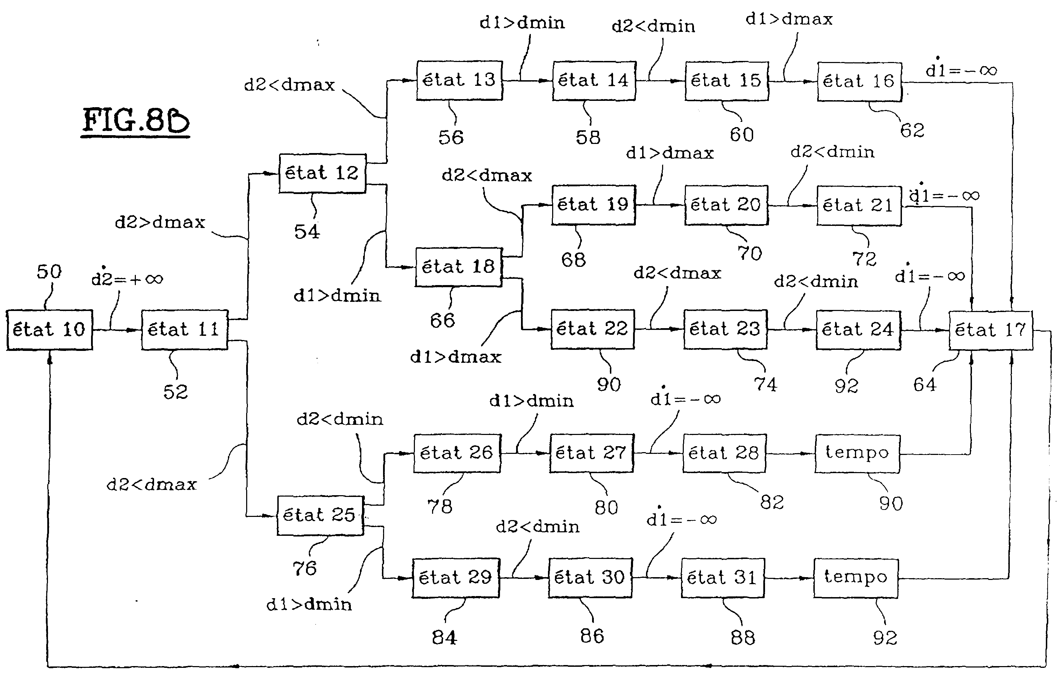

Les différentes explications exposées ci-dessus conduisent à réaliser le dispositif d'analyse 18 de la figure 1A sous la forme d'un circuit d'états selon le schéma de la figure 8A.

L'état initial "0" (rectangle 30) correspond à l'état d'attente pendant lequel les mesures de d1 et d2 sont effectuées sans interruption. Dès que le véhicule C commence à passer devant un créneau, la distance mesurée d2 fait un saut brusque tandis que la distance mesurée d1 augmente linéairement. La dérivée de d2 est positive et très grande (valeur infini +∞), ce qui signifie un début de créneau. Le calcul de cette dérivée de d2 fait passer le dispositif de l'état "0" à l'état "1" (rectangle 32). Dans cet état "1", les mesures d1 et d2 sont comparées à dmin et dmax qui ont été déterminées ci-dessus.

Plusieurs cas peuvent se produire :

<u>Premier cas : créneau entre les véhicules A et B</u>

- pendant le passage devant le créneau, les conditions d2 > dmax et d1 > dmax, sont remplies simultanément, le dispositif 18 passe à l'état "2" (rectangle 34) qui indique un créneau très grand et cette information est affichée à l'état "6" (rectangle 42) par le circuit d'affichage 22 lorsque la dérivée de d1 est égale à - ∞.

<u>Deuxième cas : créneau entre les véhicules B et G</u>

- pendant le passage devant le créneau, les conditions d2 < dmin et d1 < dmin sont remplies simultanément, le dispositif 18 passe à l'état "3" (rectangle 36) qui indique un créneau trop petit et cette information est affichée à l'état "6" (rectangle 42) par le circuit d'affichage 22 lorsque la dérivée de d1 est égale à - ∞.

Troisième cas : créneau entre les véhicules G et H

- pendant le passage devant le créneau, les conditions dmin < d2 < dmax et dmin < d1 < dmax sont remplies simultanément, le dispositif passe à l'état "4" (rectangle 38) qui indique un créneau suffisant que l'on peut calculer. Cette information de créneau suffisant et de la valeur D sont affichées à l'état "6" (rectangle 42) par le circuit d'affichage 22 lorsque la dérivée de d1 est égale à - ∞.

Pour chaque couple de valeurs simultanées d1, d2, le dispositif calcule la valeur Dj et la valeur D qui est retenue est, par exemple, la moyenne arithmétique des valeurs Dj. Cette valeur retenue D est comparée à la longueur du véhicule porteur pour déterminer si le créneau a une longueur suffisante.

Le fonctionnement du circuit d'états du dispositif d'analyse 18 implique que les mesures de d1 et d2 fournies par les télémètres soient comparées à dmin et dmax dans des comparateurs qui peuvent être réalisés par des circuits électroniques dédiés ou par des programmes d'un microprocesseur.

Le circuit de commande 20 comprend essentiellement des touches dont la manipulation permet de réaliser un certain nombre de fonctions telles que :

- démarrage/arrêt du système de détection,
- indication de la longueur du véhicule porteur,
- éventuellement, valeurs de Ymin et Ymax,
- etc ... .

Les informations de commande s'affichent sur le circuit d'affichage 22 au fur et à mesure de leur entrée et sont ensuite validées.

Pour ce qui est du système de détection et de mesure de créneau de stationnemnet décrit à la figure 1B, son fonctionnement est le suivant.

Afin de pouvoir mesurer la longueur du créneau de stationnement dans tous les cas, c'est-à-dire même si d1 et d2 ne peuvent être mesurées simultanément, l'invention met en oeuvre le dispositif de mesure 48 des distances parcourues par le véhicule porteur, également appelé odomètre, qui est déclenché par les mesures de d1 et d2 par les télémètres.

Pour mesurer la longueur du créneau de stationnement lors du passage du véhicule C (Figure 7A) le long de la file de stationnement, il est nécessaire de déclencher et d'arrêter l'odomètre 48 à des instants précis qui sont déterminés par les valeurs de d1 et d2 par rapport aux valeurs calculées dmin et dmax. De manière générale, il suffit de relever les valeurs de l'odomètre aux instants précis définis par les comparaisons de d1 et d2 avec dmin et dmax. A cet effet, des comparaisons sont effectuées entre d1, d2 et dmin, dmax et les signaux résultant de ces comparaisons actionnent une machine d'états qui sera décrite en relation avec la figure 8B. Sur cette figure 8B, les rectangles représentent les états de la machine et le passage d'un état au suivant s'effectue pour une valeur déterminée de d1, d2 ou de la dérivée première de d1 ou d2, c'est-à-dire lorsque la condition indiquée entre les deux rectangles successifs est remplie.

L'état "10" (rectangle 50) est l'état initial de la machine d'états. Lorsque le véhicule C (Figure 7A) se déplace selon la flèche 40, il existe un instant où le télémètre 12 ne détecte plus le flanc du véhicule A en stationnement mais une valeur très grande qui correspond à un créneau entre les véhicules A et B. La dérivée de d2 est très grande et la machine passe à l'état "11" (rectangle 52) qui est un état d'attente correspondant à un début de créneau.

Si d2 > dmax, la machine passe à l'état 12 (rectangle 54) qui est aussi un état d'attente. Dès que d2 < dmax, cela signifie que le télémètre détecte le pare-chocs du véhicule B, la machine passe à l'état "13" (rectangle 56) et l'odomètre 48 est déclenché pour relever les valeurs d2i = f(Xi) qui sont les distances télémétrées d2 par rapport au pare-chocs du véhicule B en fonction des distances parcourues Xi.

Lorsque d1 > dmin, cela signifie que le télémètre 10 ne détecte plus le flanc du véhicule A mais son pare-chocs, la machine passe à l'état "14" (rectangle 58) correspondant à des mesures simultanées de d1 et d2 sur les pare-chocs des véhicules A et B. Dans cet état "14", la longueur Dj du créneau est donnée par :

$$Dj = (d1j + d2j)\cos\theta - L, \qquad (1')$$

pour des valeurs simultanées de d1j et d2j.

Lorsque d2 < dmin, cela signifie que le télémètre 12 détecte le flanc du véhicule B, c'est-à-dire la fin du créneau, et le système passe à l'état "15" (rectangle 60). Dans cet état, les mesures d2i = f(Xi) sont arrêtées mais sont remplacées par des mesures d1n=f(Xn) qui sont les distances télémétrées par rapport au pare-chocs du véhicule A en fonction des distances parcourues Xn.

Il en résulte que les valeurs d2i et d1n varient symétriquement et qu'il existe plusieurs couples (d2i, d1n,) tels que :

$$d2i(Xi) = d1n(Xn) = d1n(Xi + Xp) = d$$

ce qui permet de déterminer des valeurs Xp et de calculer pour chacune des valeurs Xp une valeur Dp telle que :

$$Dp = 2dcos\theta - L + Xp.$$

Ces valeurs Dp ainsi déterminées peuvent être corrélées entre elles et avec les valeurs Dj lorsque d1 et d2 sont mesurées simultanément, ce qui permet de déterminer la valeur la plus probable de D, par exemple la moyenne arithmétique de Dp et Dj.

Ces mesures de d1n sont effectuées jusqu'à l'instant où d1 > dmax, ce qui signifie que le pare-chocs du véhicule A n'est plus détecté : la machine d'états passe alors à l'état "16" (rectangle 62).

Dès que le télémètre 10 détecte le flanc du véhicule B, la variation brusque de d1 correspond à une dérivée première de d1 qui est grande et négative, de sorte que la machine passe à l'état "17" (rectangle 64) qui est l'état final pendant lequel la valeur de D la plus probable est affichée.

Lorsque la machine est dans l'état "12" (rectangle 54), dû à la réalisation de la condition d2 > dmax, et que d1 > dmin, ce qui signifie que le télémètre 10 détecte le pare-chocs du véhicule A, la machine passe à l'état 18 (rectangle 66) qui déclenche l'odomètre et les valeurs d1i = f(Xi) sont relevées au fur et à mesure du déplacement du véhicule C.

Lorsque d2 < dmax, cela signifie que le télémètre 12 détecte le pare-chocs du véhicule B. Il y a donc simultanément des valeurs de d1 et d2 correspondant aux pare-chocs des véhicules A et B. La distance D est alors donnée par la formule (1') pour chaque couple de valeurs simultanées. La machine passe à l'état "19" (rectangle 68).

Ces mesures simultanées de d1 et d2 sur les pare-chocs cessent dès que d1 > dmax et la machine passe alors à l'état "20" (rectangle 70), état pendant lequel sont relevées les valeurs d2n = f(Xn). Ces dernières valeurs sont comparées aux valeurs d1i = f(Xi) pour déterminer les couples de valeurs tels que :

$$d1i(Xi) = d2n(Xn) = d2n(Xi + Xp) = d$$

ce qui permet de déterminer des valeurs Xp et de calculer pour chacune des valeurs Xp une valeur Dp telle que :

$$Dp = 2dcos\theta - L + Xp$$

valeurs Dp que l'on peut corréler entre elles et avec les valeurs Dj obtenues à partir des valeurs simultanées de d1 et d2.

Ces mesures de d2n sont arrêtées dès que d2 < dmin, c'est-à-dire lorsque le télémètre 12 détecte le flanc du véhicule B. La machine passe alors à l'état 21 (rectangle 72) pendant lequel sont effectuées les corrélations indiquées ci-dessus.

Dès que le télémètre 10 détecte le flanc du véhicule B, ce qui correspond à la valeur infinie de la dérivée première de d1, la machine passe à l'état final "17" (rectangle 64) durant lequel s'affiche la valeur retenue de D après corrélation.

Etant dans l'état "18" (rectangle 66), la machine passe à l'état "22" (rectangle 90) lorsque d1 > dmax, ce qui correspond à un créneau qui est largement assez grand pour garer le véhicule C. Pour mesurer la longueur D du créneau, les relevés de d1i = f(Xi) sont arrêtés dès que d1 > dmax (état "22") et sont remplacés par les relevés de d2n < f(Xn) dès que d2 < dmax, c'est-à-dire lorsque le télémètre 12 détecte le pare-chocs du véhicule B. Ces relevés s'effectuent jusqu'à l'instant où d2 < dmin, c'est-à-dire lorsque le télémètre 12 détecte le flanc du véhicule B, auquel cas la machine passe à l'état 24.

Comme dans les états "16" et "21", les valeurs d2n = f(Xn) sont comparés aux valeurs d1i = f(Xi) pour déterminer les couples de valeurs tels que :

$$d1i(Xi) = d2n(Xn) = d2n(Xi + Xp) = d$$

ce qui permet de déterminer des valeurs Xp et de calculer pour chacune des valeurs Xp une valeur Dp telle que :

$$Dp = 2d\cos\theta - L + Xp.$$

Cependant, dans ce cas, aucune corrélation n'est possible avec des valeurs Dj car il ne peut y avoir de valeurs simultanées de d1 et d2 sur les pare-chocs des véhicules A et B.

La valeur retenue pour D est affichée à l'état final "17" dès que le télémètre 10 détecte le flanc du véhicule B, ce qui correspond à une valeur infinie négative pour la dérivée première de d1.

Le passage de l'état "11" (rectangle 52) à l'état "25" (rectangle 76) est effectué lorsque d2 < dmax après la transition ∞ de d2, c'est-à-dire lorsque le télémètre 12 détecte le pare-chocs du véhicule B. Dans cet état "25", l'odomètre est déclenché pour relever : d2i = f(Xi).

Lorsque d2 < dmin, ce qui correspond à la détection du flanc du véhicule B par le télémètre 12, la machine passe à l'état "26" (rectangle 78), qui arrête les relevés de d2i = f(Xi) et qui indique que le créneau est trop petit car aucune mesure de d1 par le télémètre 10 n'a été possible.

Cependant, il est possible de mesurer ce créneau en effectuant des relevés d1n = f(Xn) dès que d1 > dmin, c'est-à-dire lorsque le télémètre 10 détecte le pare-chocs du véhicule A. La machine passe à l'état "27" (rectangle 80). Les relevés d1n = f(Xn) sont arrêtés dès que la dérivée de d1 est égale à - ∞, c'est-à-dire lorsque le télémètre 10 détecte le flanc du véhicule B. La machine passe dans l'état "28" (rectangle 82) pendant lequel sont déterminées les couples de valeurs tels que :

$$d2i(Xi) = d1n(Xn) = d1n(Xi + Xp) = d$$

ce qui permet de déterminer des valeurs Xp et de calculer pour chacune des valeurs Xp une valeur Dp telle que :

$$Dp = 2d\cos\theta - L + Xp$$

et de retenir ensuite une valeur probable D qui est, par exemple, la moyenne arithmétique des valeurs Dp.

Cette valeur D est affichée à l'état final "17" dès que les calculs sont terminés ou après un délai ou temporisation T (rectangle 90).

De l'état "25" (rectangle 76), la machine passe à l'état "29" (rectangle 84) lorsque d1 > dmin, c'est-à-dire lorsque le télémètre 10 détecte le pare-chocs du véhicule A. Comme par ailleurs d2 < dmax, ce qui correspond à la détection du pare-chocs du véhicule B par le télémètre 12, il y a mesures simultanées de d1 et d2 de sorte que la longueur du créneau peut être calculée à chaque mesure par la formule :

$$Dj = (d1j + d2j)\cos\theta - L.$$

Dès que d2 < dmin, d1 et d2 ne peuvent plus être mesurées simultanément et la machine passe à l'état "30" (rectangle 86).

L'état "30" arrête les mesures d2i = f(Xi) qui ont commencé à l'état "25" et les remplace par des mesures de d1 telles que :

$$d1n = f(Xn)$$

jusqu'à ce que la dérivée de d1 est égale à -∞, condition qui fait passer la machine à l'état "31" (rectangle 88).

Dans cet état "31", les valeurs de d2j et d1n sont comparées pour déterminer les valeurs de Xp telle que :

$$d2i(Xi) = d1n(Xn) = d1n(Xi + Xp) = d$$

ce qui permet ensuite de calculer :

$$Dp = 2d\cos\theta - L + Xp.$$

Les valeurs de Dj et Dp sont corrélées pour déterminer une valeur probable de D. Cette valeur D est affichée à l'état final "17" lorsque les calculs sont terminés ou après un délai ou temporisation T (rectangle 92).

La machine revient à l'état initial "10" soit à la demande du chauffeur, soit automatiquement après un certain laps de temps.

Le circuit de commande 20 comprend essentiellement des touches dont la manipulation permet de réaliser un certain nombre de fonctions telles que :

- démarrage/arrêt du système de détection et mesure,
- indication de la longueur du véhicule porteur,
- éventuellement, valeurs de Ymin et Ymax,
- etc ... .

Les informations des commandes s'affichent sur le circuit d'affichage 22 au fur et à mesure de leur entrée et sont ensuite validées.

## Revendications

1. Système de détection de créneau entre deux véhicules successifs (A, B) d'une file de stationnement de véhicules embarqué sur un véhicule porteur (C), caractérisé en ce qu'il comprend :

   - au moins un télémètre (10, 12, 14, 16) qui est disposé sur au moins un côté latéral du véhicule porteur (C), ledit télémètre émettant un faisceau d'ondes dont l'axe d'émission/réception (E1, E2) peut prendre au moins deux directions ($\theta_1$, $\theta_2$) par rapport à la direction de déplacement (30) du véhicule porteur (C) et fournissant des valeurs de distances (d1, d2) pour chaque direction d'émission/réception, et
   - un dispositif d'analyse des valeurs des distances mesurées (d1, d2) suivant les deux directions d'émission/réception (E1, E2), ledit dispositif d'analyse indiquant au chauffeur du véhicule porteur (C) si la distance entre les deux véhicules successifs (A, B) de la file de stationnement est suffisante ou non pour garer le véhicule porteur (C).

2. Système selon la revendication 1, caractérisé en ce que le système de détection comprend au moins deux télémètres identiques (10 et 12, 14 et 16) disposés sur au moins un côté latéral du véhicule porteur (C) et émettant chacun suivant un axe d'émission/réception (E1, E2), les axes d'émission/réception (E1, E2) ayant des directions ($\theta_1$, $\theta_2$) par rapport à la direction de déplacement du véhicule porteur (C).

3. Système selon la revendication 2, caractérisé en ce que les deux télémètres (10 et 12, 14 et 16) sont disposés à un même endroit du côté latéral du véhicule porteur(C).

4. Système selon la revendication 2, caractérisé en ce que les deux télémètres sont séparés par une distance déterminée (L).

5. Système selon la revendication 2, 3 ou 4, caractérisé en ce que les axes d'émission/réception (E1, E2) des télémètres (10, 12) sont dirigés vers l'extrémité la plus éloignée du véhicule porteur (C).

6. Système selon la revendication 2, 3 ou 4, caractérisé en ce que les axes d'émission/réception (E1, E2) des télémètres (10, 12) sont dirigés vers l'extrémité la plus proche du véhicule porteur (C).

7. Système selon l'une quelconque des revendications précédentes 1 à 6, caractérisé en ce que les angles ($\theta_1$, $\theta_2$) des axes d'émission/réception (E1, E2) par rapport à l'axe longitudinal (30) du véhicule porteur (C) sont égaux.

8. Système selon l'une quelconque des revendications précédentes 1 à 7, caractérisé en ce que le dispositif d'analyse (18) comprend des moyens de comparaison pour comparer les valeurs des distances mesurées (d1, d2) lors du passage du véhicule porteur (C) à des valeurs de seuils (dmin, dmax) et déterminer si les valeurs simultanées (d1, d2) correspondent à un créneau de longueur suffisante ou non pour garer le véhicule porteur (C).

9. Système L étant la distance algébrique entre les télémètres (10, 12 et 14, 16) selon la revendication 8, caractérisé en ce que les valeurs de seuils (dmin, dmax) sont données par les relations :

$$dmin = Ymax/sin\theta \text{ et } dmax = (w + Ymin)/sin\theta$$

dans lesquelles :

- Ymax et Ymin sont respectivement les distances maximale et minimale entre les côtés latéraux en regard du véhicule porteur (C) et des véhicules (A, B) de la file de stationnement, et
- w est la largeur minimale des véhicules de la file de stationnement.

10. Système selon la revendication 8 ou 9, caractérisé en ce que la longueur (D) du créneau est considérée comme suffisante lorsque les comparaisons satisfont à la relation suivante :

$$- d1 > dmax \text{ et } d2 > dmax.$$

11. Système selon la revendication 8 ou 9, caractérisé en ce que la longueur (D) du créneau est considérée comme insuffisante lorsque les comparaisons satisfont aux relations d1<dmin et d2<dmin.

12. Système selon la revendication 8 ou 9, caractérisé en ce que la longueur (D) du créneau est considérée comme suffisante lorsque les comparaisons satisfont aux relations dmin<d1<dmax et dmin<d2<dmax et que la longueur (D) calculée par :

$$D = d1cos\theta1 + d2cos\theta2 - L$$

est au moins égale à la longueur du véhicule porteur.

13. Système selon la revendication 12, caractérisé en ce que la longueur (Dj) est calculée pour plusieurs couples de valeurs simultanées (d1, d2) et que la longueur (D) qui est retenue est égale à la moyenne arithmétique des valeurs calculées (Dj).

14. Système selon l'une quelconque des revendications précédentes, caractérisé en ce que les angles ($\theta_1$, $\theta_2$) des axes d'émission/réception (E1, E2) sont égaux.

15. Système de détection selon l'une quelconque des revendications précédentes, caractérisé en ce qu'il comprend :

- un dispositif d'analyse des valeurs des distances mesurées (d1, d2) suivant les deux directions d'émission/ réception (E1, E2) de manière à détecter les mesures qui correspondent à des réflexions sur les pare-chocs des véhicules en stationnement (A, B) de part et d'autre du créneau de stationnement et à fournir des signaux de détection de début et fin de pare-chocs,
- un dispositif de mesure (48) de la distance parcourue (Xi, Xn) par le véhicule porteur (C) ou odomètre qui est déclenché par les signaux de détection de début et de fin de pare-chocs des véhicules en stationnement (A, B), et
- un dispositif de calcul (46) de la longueur (D) du créneau de stationnement à partir des distances (d1, d2) mesurées par le télémètre (10, 12, 14, 16) et des distances parcourues par le véhicule porteur (C) et mesurées par le dispositif de mesure (48).

16. Système selon la revendication 15 et la revendication 8 ou 9, caractérisé en ce que la longueur (D) est considérée comme suffisante lorsque les valeurs de d1 et d2 (d1j, d2j) sont comprises simultanément entre dmin et dmax et que la longueur Dj du créneau donnée par la relation :

$$Dj = d1j.cos\theta1 + d2j.cos\theta2 - L$$

est au moins égale à la longueur du véhicule porteur (C), L étant la distance algébrique entre les télémètres (10, 12 et 14, 16).

17. Système selon la revendication 16, caractérisé en ce que le dispositif de calcul 46 calcule la moyenne arithmétique

EP 0 783 114 A1

des valeurs Dj.

**18.** Système selon l'une quelconque des revendications précédentes 15 à 17, caractérisé en ce que le dispositif d'analyse (18) fournit des signaux de prise en compte des valeurs (Xi, Xn) de l'odomètre (48) lorsque les distances télémétrées d1 ou d2 sont inférieures à dmax ou sont supérieures à dmin.

**19.** Système selon la revendication 18, caractérisé en ce que le dispositif de calcul (46) :

- relève les valeurs de d1 et d2 (d1i, d2n) en fonction des valeurs correspondantes (Xi, Xn) de l'odomètre (48),
- détermine une valeur Xp telle que :

$$d1i(Xi) = d2n(Xn) = d2n(Xi + Xp) = d$$

- et calcule la longueur Dp du créneau par la relation :

$$Dp = 2dcos\theta - L + Xp.$$

**20.** Système selon la revendication 18, caractérisé en ce que le dispositif de calcul (46) :

- relève les valeurs de d2 et d1 (d2i, d1n) en fonction des valeurs (Xi, Xn) de l'odomètre (48),
- détermine une valeur Xp telle que :

$$d2i(Xi) = d1n(Xn) = d1n(Xi + Xp) = d$$

- et calcule la longueur Dp du créneau par la relation :

$$Dp = 2dcos\theta - L + Xp.$$

**21.** Système selon la revendication 19 ou 20, caractérisé en ce que le dispositif de calcul (46) calcule la moyenne arithmétique des valeurs Dp.

**22.** Système selon la revendication 19, 20 ou 21 caractérisé en ce que le dispositif de calcul (46) calcule la moyenne arithmétique des valeurs Dj et Dp.

FIG.1A

FIG.1B

FIG.2

FIG.3

FIG.4

FIG.5

FIG.6

FIG.7A

FIG.7B

FIG.8A

EP 0 783 114 A1

EP 0 783 114 A1

## FIG.8b

état 10 — 50
$d\dot2=+\infty$
état 11 — 52

d2>dmax
d2<dmax

état 12 — 54

d2<dmax
d1>dmin

état 18 — 66

d1>dmin
d1>dmax

état 13 — 56 → d1>dmin → état 14 — 58 → d2<dmin → état 15 — 60 → d1>dmax → état 16 — 62 → $d\dot1=-\infty$

d2<dmax

état 19 — 68 → d1>dmax → état 20 — 70 → d2<dmin → état 21 — 72 → $d\dot1=-\infty$

d2<dmax          d2<dmin          $d\dot1=-\infty$

état 22 — 90 → état 23 — 74 → état 24 — 92 → 64 → état 17

état 25 — 76

d2<dmin
d1>dmin

état 26 — 78 → d1>dmin → état 27 — 80 → $d\dot1=-\infty$ → état 28 — 82 → tempo — 90

d2<dmin          $d\dot1=-\infty$

état 29 — 84 → état 30 — 86 → état 31 — 88 → tempo — 92

Office européen
des brevets

**RAPPORT DE RECHERCHE EUROPEENNE**

Numero de la demande

EP 96 40 2851

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DE 38 44 340 A (LICENTIA GMBH) 5 Juillet 1990 | 1,2,4-7, 14 | G01S13/93 B60Q1/48 |
| Y | * colonne 2, ligne 12 - ligne 32; figure 2 * | 15,18 | |
| | --- | | |
| Y | DE 38 13 083 A (IND TECH RES INST) 2 Novembre 1989 * page 2, ligne 50 - page 3, ligne 64; figures 1-3 * | 15,18 | |
| | --- | | |
| D,A | EP 0 305 907 A (BAYERISCHE MOTOREN WERKE AG) 8 Mars 1989 * colonne 2, ligne 40 - colonne 3, ligne 32; figures 1,2 * | 1 | |
| | --- | | |
| A | PATENT ABSTRACTS OF JAPAN vol. 007, no. 146 (P-206), 25 Juin 1983 & JP 58 058483 A (NISSAN JIDOSHA KK), 7 Avril 1983, * abrégé * | 1 | |
| | ----- | | **DOMAINES TECHNIQUES RECHERCHES (Int.Cl.6)** G01S B60Q |

Le présent rapport a été établi pour toutes les revendications

| Lieu de la recherche | Date d'achèvement de la recherche | Examinateur |
|---|---|---|
| LA HAYE | 1 Avril 1997 | Haffner, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)